(19) Europäisches Patentamt
European Patent Office
Office européen des brevets

(11) EP 0 821 254 A1

(12) EUROPÄISCHE PATENTANMELDUNG

(43) Veröffentlichungstag:
28.01.1998 Patentblatt 1998/05

(51) Int. Cl.⁶: $G02B\ 6/42$, F21V 8/00

(21) Anmeldenummer: 97111623.1

(22) Anmeldetag: 09.07.1997

(84) Benannte Vertragsstaaten:
AT BE CH DE DK ES FI FR GB GR IE IT LI LU MC NL PT SE

(30) Priorität: 26.07.1996 DE 19630240

(71) Anmelder: Hella KG Hueck & Co.
59552 Lippstadt (DE)

(72) Erfinder:
• Bollow, Laars-Dietrich
  59597 Erwitte (DE)
• Eichhorn, Karsten, Dr.
  59320 Ennigerloh (DE)

(54) **Einkopplungseinheit zum Einkoppeln von Licht in einen Lichtleiter**

(57) Einkopplungseinheit zum Einkoppeln von Licht einer Lichtquelle (1) in einen Lichtleiter (3) über eine erste Grenzfläche (11), wobei die erste Grenzfläche (11) derart ausgebildet ist, daß das Licht als konvergierendes Lichtbündel weitergeleitet wird. Die erste Grenzfläche (11) ist nach einer ersten Ausführungsform als Einkopplungsfläche (23) eines Lichtleiters (3) ausgebildet und nach einer zweiten Ausführungsform als Ein-kopplungsfläche (10) eines Einkopplungsteils (2) ausgebildet.

In einer weiteren Ausführungsform sind beide Grenzflächen eines regelförmigen Enkopplungsteils gewölbt und aspärisch geformt.

Figur 1

**Beschreibung**

Die Erfindung betrifft eine Einkopplungseinheit zum Einkoppeln von Licht einer Lichtquelle in einen Lichtleiter über eine erste Grenzfläche.

Beim Einkoppeln von Licht in einen Lichtleiter wird das von einer Lichtquelle ausgestrahlte Licht über eine Einkopplungsfläche, die die Grenzfläche vom Lichtleitermaterial zum umgebenden Medium bildet, in einen Lichtleiter eingekoppelt. Eine der Lichtquelle benachbarte erste Grenzfläche entspricht der Einkopplungsfläche des Lichtleiters bei direkter Einkopplung einerseits und der Einkopplungsfläche des Einkopplungsteiles bei Einkopplung über ein Einkopplungsteil andererseits.

Aus der DE 41 29 094 A1 ist bekannt, zur Reduzierung von Lichtverlusten, eine als Leuchtdiode ausgebildete Lichtquelle mit ihrer konvexen Lichtaustrittsfläche in die Einkopplungsfläche des Lichtleiters hineinragen zu lassen. Nachteilig hierbei ist, daß zum einen die Lichtquelle einen kleineren Durchmesser als der Lichtleiter aufweisen muß und zum anderen die erste Grenzfläche eine solche lichtkonvergierende Wirkung erzielt, die einen gezielten Einfluß auf die weitere Lichtführung bezüglich Lichtverteilung und beispielsweise Akzeptanzwinkel vermindert.

In der EP 0 568 190 A1 ist eine Einkopplungseinheit beschrieben, die eine Lichtquelle aufweist, die Licht in einem Brennpunkt fokussiert und über einen Glaszylinder als Einkopplungsteil in einen Lichtleiter einkoppelt. Weiterhin ist aus der EP 0 568 190 A1 ein Einkopplungsteil bekannt, daß zwei Kegelstümpfe mit einer großen und einer kleinen Stirnfläche aufweist, die einander zugekehrt und über ein zylindrisches Teil miteinander verbunden sind. Diese Einkopplungsteile haben den Zweck, auf der Einkopplungsfläche des Lichtleiters entstehende Wärmeprobleme zu vermindern und für eine gleichmäßigere Lichtverteilung im Lichtleiter bzw. an dessen Lichtaustrittsfläche zu sorgen. Nachteilig bei diesen bekannten Einkopplungsteilen ist, daß sie zur Erzielung einer gleichmäßigeren Lichtverteilung eine relativ große Baulänge aufweisen müssen und nur bedingt Einfluß auf die Lichtführung im Lichtleiter genommen werden kann. Weiterhin weisen Sie relativ hohe Lichtverluste auf.

Aufgabe der vorliegenden Erfindung ist es daher, eine Einkopplungseinheit zu schaffen, die sowohl bei einer direkten Lichteinkopplung als auch bei einer Einkopplung über ein Einkopplungsteil eine effizientere Lichtführung ermöglicht.

Diese Aufgabe wird erfindungsgemäß dadurch gelöst, daß die erste Grenzfläche als gewölbte Fläche derart ausgebildet ist, daß das von der Lichtquelle emittierte Licht als konvergierendes Lichtbündel weitergeleitet wird.

Durch die als gewölbte Fläche ausgebildete erste Grenzfläche des Einkopplungsteiles kann vorteilhaft gleich am Beginn des Lichtleiters bzw. Einkopplungsteiles auf die weitere Lichtführung eingewirkt werden. Dadurch ist es möglich, eine effizientere Lichtführung zu erzielen.

In einer vorteilhaften Ausgestaltung der Erfindung ist die erste Grenzfläche als Einkopplungsfläche eines Einkopplungsteiles ausgebildet, dessen der ersten Grenzfläche gegenüberliegende zweite Grenzfläche der Einkopplungsfläche des Lichtleiters benachbart ist. Die erste Grenzfläche, die der als Ellipsoidmodul ausgebildeten Lichtquelle benachbart ist, ist eine konkav gewölbte Fläche, die als kartesisches Oval ausgebildet ist. Die der ersten Grenzfläche abgewandte zweite Grenzfläche ist ebenfalls als konkaves kartesisches Oval ausgebildet. Neben einem verbesserten Wirkungsgrad bzw. einer erhöhten Beleuchtungsstärke ist im Lichtleiter ein weitgehend paralleles Bündel mit gleichmäßiger Lichtverteilung erzielbar.

Nach einer weiteren vorteilhaften Ausgestaltung der Erfindung sind die Grenzflächen des Einkopplungsteiles konvex geformt. Dadurch wird die Ausbildung eines zweiten Brennpunktes vermieden und die thermische Belastung herabgesetzt.

Nach einer weiteren vorteilhaften Ausgestaltung ist die Mantelfäche des Einkopplungsteiles kegelig ausgebildet, wobei sich das Einkopplungsteil zum Lichtleiter hin verjüngt. Das Licht der Lichtquelle wird in die größere erste Grenzfläche in das Einkopplungsteil eingekoppelt und über die kleinere an den Durchmesser des Lichtleiters angepaßte zweite Grenzfläche aus dem Einkopplungsteil ausgekoppelt. Durch die kegelförmige Gestaltung des Einkopplungsteiles lassen sich die Verluste verringern und der Wirkungsgrad weiter erhöhen.

Grundsätzlich ist es auch möglich, die Lichtquelle als Paraboloidmodul auszubilden und/oder mit einem Kondensor zu versehen.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

Figur 1 Eine schematische Darstellung einer Einkopplungseinheit mit Ellipsoidmodul als Lichtquelle und konkav geformten Grenzflächen des Einkopplungsteiles,

Figur 2 eine schematische Darstellung einer Einkopplungseinheit mit Ellipsoidmodul als Lichtquelle und konvex geformten Grenzflächen,

Figur 3    eine schematische Darstellung einer Einkopplungseinheit mit Paraboloidmodul als Lichtquelle und konvex-/konkavgeformten Grenzflächen,

Figur 4    eine schematische Darstellung einer weiteren Einkopplungseinheit mit Paraboloidmodul als Lichtquelle und konvex-/konkavgeformten Grenzflächen,

Figur 5    die Geometrie einer als kartesisches Oval ausgebildeten Grenzfläche,

Figur 6    eine schematische Darstellung eines Lichtleiters mit einer Leuchtdiode als Lichtquelle und konvex-geformter erster Grenzfläche.

Eine Einkopplungseinheit besteht aus einer Lichtquelle (1), einem Einkopplungsteil (2) und einem Lichtleiter (3).

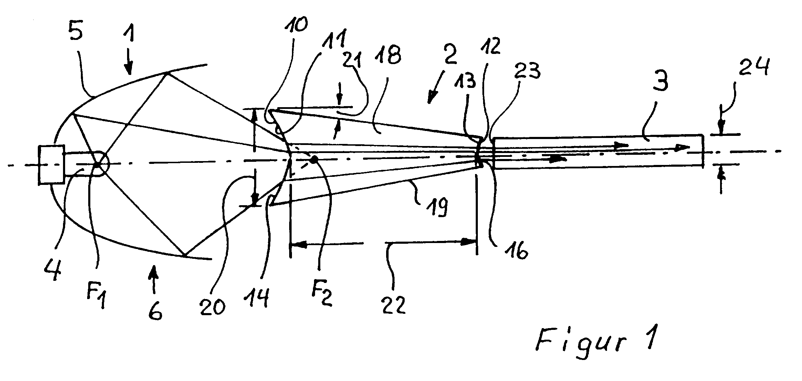

Figur 1 zeigt die Lichtquelle (1) mit einer Strahlungsquelle (4), die im ersten Brennpunkt $F_1$ eines Reflektors (5) angeordnet ist. Der Reflektor (5) bündelt das Licht der Strahlungsquelle (4) in seinem zweiten Brennpunkt $F_2$. In den nachfolgend beschriebenen Ausführungsbeispielen werden gleiche Teile mit den gleichen Bezugsziffern bezeichnet.

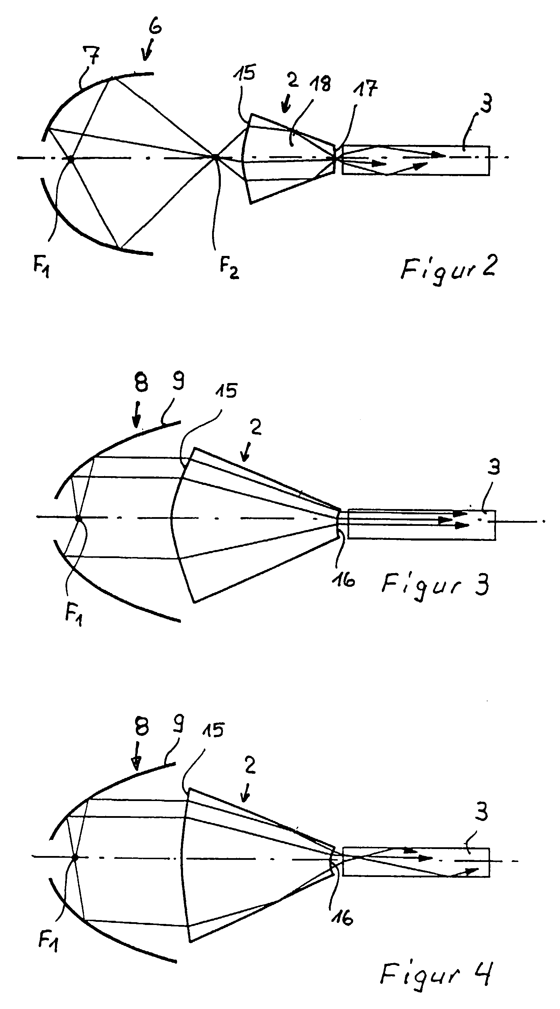

Nach einem ersten Ausführungsbeispiel gemäß Figur 1 und 2 ist die Lichtquelle (1) als Ellipsoidmodul (6) mit einem als Ellipsoid (7) ausgebildeten Reflektor (5) ausgebildet. Das Einkopplungsteil (2) weist als Einkopplungsfläche (10) eine erste Grenzfläche (11) auf, die gewölbt ausgebildet ist. Die Auskopplungsfläche des Einkopplungsteiles (2) wird von der ebenfalls gewölbten zweiten Grenzfläche (13) gebildet. Die Lichtführung in dem Einkopplungsteil (2) und damit auch in den anschließenden Lichtleiter (3) wird im wesentlichen durch die Kümmung der ersten Grenzfläche (11) und der zweiten Grenzfläche (13) bestimmt. Die erste Grenzfläche (11) ist nach einer vorteilhaften Ausgestaltung als konkave Ovalfläche (14), die als kartesisches Oval geformt ist, ausgebildet.

Nach einer weiteren abgewandelten Ausführungsform gemäß Figur 2 ist die erste Grenzfläche (11) als konvexe Ovalfläche (15) ausgebildet, die als kartesiches Oval geformt ist. Die zweite Grenzfläche (13) des Einkopplungsteiles (2) ist als konkave Ovalfläche (16) ausgebildet, die ebenfalls als kartesisches Oval geformt ist. Im Unterschied zur Ausführungsform nach Figur 1 befindet sich der zweite Brennpunkt $F_2$ in einem vor der Einkopplungsfläche (10) angeordneten Bereich, während der Brennpunkt $F_2$ nach Figur 1 in einem der Einkopplungsfläche (10) nachgeordneten Bereich innerhalb des Einkopplungsteils (2) liegt. Durch die Anordnung und Ausbildung des Einkopplungsteils (2) treten innerhalb desselben Totalreflexionen auf, die sich im anschließenden Lichtleiter (3) in einem verstärkten Maße fortsetzen. Alternativ kann die zweite Grenzfläche (13) auch als konvexe Ovalfläche (17) ausgebildet sein, die als kartesisches Oval geformt ist.

Das Einkopplungsteil (2) ist als Einkopplungskegel (18) von seiner ersten Grenzfläche (11) zu seiner zweiten Grenzfläche (13) hin konisch verjüngend ausgebildet. Der Durchmesser der zweiten Grenzfläche (13) bzw. der Auskopplungsfläche (12) entspricht etwa dem Durchmesser (24) des Lichtleiters (3). Durch die kegelige Form des als Einkopplungskegel (18) ausgebildeten Einkopplungsteils (2) können im Bereich der Mantelfläche (19) Totalreflektionen stattfinden und die Effizienz des Einkopplungsteiles (2) erhöht werden. Der Umfang des Einkopplungsteiles (2) kann beispielsweise eingeschnürt bzw. konkav gewölbt sein. Es ist aber auch möglich, ihn zylindrisch zu gestalten.

Nach einem zweiten Ausführungsbeispiel gemäß Figur 3 und 4 ist die Lichtquelle (1) als Paraboloidmodul (8) mit einem Paraboloid (9) als Reflektor (5) ausgebildet. Die erste Grenzfläche (11) des Einkopplungsteils (2) ist übereinstimmend mit der Ausführungsform gemäß Figur 2 als konvexe Ovalfläche (15) ausgebildet. Die zweite Grenzfläche (13) ist als konkave Ovalfläche (16) ausgebildet. Im Unterschied zur Ausführungsform nach Figur 4 ist die Wölbung der ersten Grenzfläche (11) größer, so daß weitgehend Totalreflexionen innerhalb des Einkopplungsteils (2) und des nachfolgenden Lichtleiters (3) vermieden werden. Der Lichtleiter (3) kann als einzelner Leiter bzw. Lichtfaser oder als Faserbündel ausgebildet sein. Er weist eine Einkopplungsfläche (23) auf, die benachbart zu der Auskopplungsfläche (12) des Einkopplungsteils (2) angeordnet ist. Der in der Figur 1 beispielhaft dargestellte Einkopplungskegel (18) weist an seiner konkaven Ovalfläche (17) einen Einkopplungsdurchmesser (20) von 19 mm auf. Die Mantelfläche (19) ist gegenüber einer Horizontalen um einen Neigungswinkel (21) von 8 Grad geneigt. Der Abstand (22) zwischen der ersten Grenzfläche (11) und der zweiten Grenzfläche (13) beträgt 30 mm. Der Lichtleiter (3) weist einen Durchmesser (24) von 10 mm auf.

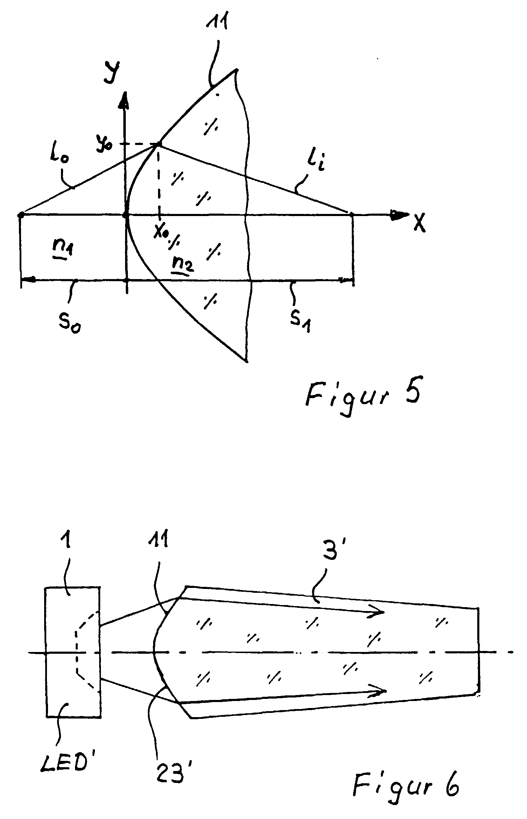

Das in Figur 5 dargestellte kartesische Oval einer ersten Grenzfläche (11) läßt sich in einer Ebene mathematisch beschreiben durch die Formel:

$$l_0 n_1 + l_1 n_2 = s_0 n_1 + s_1 n_2$$

mit

$$l_i{}^2 = (s_i - x_0)^2 + y_0{}^2 \text{ und } l_0{}^2 = (s_0 + x_0)^2 + y_0{}^2,$$

wobei $n_1$ und $n_2$ die Brechungsindizes der jeweiligen Medien bezeichnen. Exemplarisch ist in Figur 5 der Verlauf eines Lichtstrahls von einer punktförmigen Lichtquelle, die einen Abstand $s_0$ von dem Koordinatenursprung hat, zu einem im Abstand $s_1$ vom Koordinatenursprung gelegenen, durch die obige Formel festgelegten Bildpunkt dargestellt, wobei der Lichtstrahl im Punkt $x_0$, $y_0$ an der Grenzfläche (11) gebrochen wird. Die Längen $l_0$ und $l_i$ geben die Abstände der Lichtquelle zum Brechungspunkt $x_0$, $y_0$ bzw. des Bildpunktes zum Brechungspunkt $x_0$, $y_0$ an. Die Ausbildung der Grenzfläche (11) als kartesisches Oval ermöglicht eine definierte Abbildung der Lichtquelle in einem Bildpunkt.

Nach einem weiteren Ausführungsbeispiel der Erfindung gemäß Figur 6 besteht die Einkopplungseinheit aus einer Leuchtdiode (LED') als Lichtquelle (1) und einem Lichtleiter (3'), dessen Einkopplungsfläche (23') die erste Grenzfläche (11) bildet. Die Einkopplungsfläche (23') ist als kartesisches Oval konvex gewölbt. Eine solche Ausgestaltung kann beispielsweise zur Beleuchtung von Anzeigen in Armaturen eingesetzt werden.

**Patentansprüche**

1. Einkopplungseinheit zum Einkoppeln von Licht einer Lichtquelle in einen Lichtleiter über eine erste Grenzfläche, dadurch gekennzeichnet, daß die erste Grenzfläche (11) als gewölbte Fläche derart ausgebildet ist, daß das von der Lichtquelle (1) emittierte Licht als konvergierendes Lichtbündel weitergeleitet wird.

2. Einkopplungseinheit nach Anspruch 1, dadurch gekennzeichnet, daß die erste Grenzfläche (11) als Einkopplungsfläche (23) des Lichtleiters (3') ausgebildet ist.

3. Einkopplungseinheit nach Anspruch 1, dadurch gekennzeichnet, daß die erste Grenzfläche (11) als Einkopplungsfläche (10) eines Einkopplungsteiles (2) ausgebildet ist, dessen der ersten Grenzfläche (11) abgewandte zweite Grenzfläche (13) dem Lichtleiter (3) benachbart und ebenfalls gewölbt ist.

4. Einkopplungseinheit nach einem der Ansprüche 1 bis 3, dadurch gekennzeichnet, daß mindestens eine gewölbte Grenzfläche (11, 13) konkav geformt ist.

5. Einkopplungseinheit nach einem der Ansprüche 1 bis 4, dadurch gekennzeichnet, daß mindestens eine gewölbte Grenzfläche (11, 13) konvex geformt ist.

6. Einkopplungseinheit nach einem der Ansprüche 1 bis 5, dadurch gekennzeichnet, daß die gewölbte Grenzfläche (11, 13) asphärisch geformt ist.

7. Einkopplungseinheit nach Anspruch 6, dadurch gekennzeichnet, daß die gewölbte Grenzfläche (11, 13) als kartesisches Oval ausgebildet ist.

8. Einkopplungseinheit nach einem der Ansprüche 3 bis 7, dadurch gekennzeichnet, daß das Einkopplungsteil (2) als Einkopplungskegel (18), der sich zur zweiten Grenzfläche (13) hin verjüngt, ausgebildet ist.

9. Einkopplungseinheit nach Anspruch 8, dadurch gekennzeichnet, daß der Durchmesser der zweiten Grenzfläche (13) etwa dem Durchmesser des Lichtleiters (3) entspricht.

10. Einkopplungseinheit nach einem der Ansprüche 1 bis 9, dadurch gekennzeichnet, daß die Lichtquelle (1) als Leuchtdiode (LED) ausgebildet ist.

11. Einkopplungseinheit nach einem der Ansprüche 1 bis 9, dadurch gekennzeichnet, daß die Lichtquelle (1) als Ellipsoidmodul (6) ausgebildet ist, das in einem ersten Brennpunkt ($F_1$) eines ellipsoiden Reflektors (5) eine Strahlungsquelle (4) aufweist, deren Licht in einem zweiten Brennpunkt ($F_2$) gebündelt wird.

12. Einkopplungseinheit nach einem der Ansprüche 1 bis 9, dadurch gekennzeichnet, daß die Lichtquelle (1) als Paraboloidmodul (8) ausgebildet ist, das in einem Brennpunkt ($F_1$) eines paraboloiden Reflektors (5) eine Strahlungsquelle (4) aufweist.

13. Einkopplungseinheit nach einem der Ansprüche 1 bis 12, dadurch gekennzeichnet, daß der Lichtleiter (3) als Lichtleitstab ausgebildet ist.

14. Einkopplungseinheit nach einem der Ansprüche 1 bis 12, dadurch gekennzeichnet, daß der Lichtleiter (3) als Lichtleitfaser ausgebildet.

**15.** Einkopplungseinheit nach einem der Ansprüche 1 bis 12, dadurch gekennzeichnet, daß der Lichtleiter als Faserbündel ausgebildet ist.

Figur 1

Figur 2

Figur 3

Figur 4

Figur 5

Figur 6

EP 0 821 254 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | APPLIED OPTICS, Bd. 27, Nr. 19, 1.Oktober 1988, Seiten 4126-4130, XP000032348 XIAOHUI NING: "THREE-DIMENSIONAL IDEAL 01/02 ANGULAR TRANSFORMER AND ITS USES IN FIBER OPTICS" | 1,3-5, 8-10,14 | G02B6/42 F21V8/00 |
| A | * Seite 4129, Spalte 1, Absatz 3 * <br> * Abbildungen 4,7,8,10 * <br> --- | 2,6 | |
| X | US 4 883 333 A (YANEZ SERGE J) 28.November 1989 | 1,5,10, 11,14 | |
| A | <br> * Spalte 4, Zeile 28 - Spalte 5, Zeile 18; Abbildungen 2-4 * <br> * Spalte 1, Zeile 49 - Zeile 50 * <br> --- | 8,9,12 | |
| X | EP 0 449 804 A (KOLP HEINRICH GMBH) 2.Oktober 1991 | 1,5,11, 14 | |
| A | <br> * Spalte 1, Zeile 9 - Zeile 14 * <br> * Abbildungen 1,4 * <br> --- | 8,9 | |
| X | PATENT ABSTRACTS OF JAPAN vol. 005, no. 130 (P-076), 20.August 1981 & JP 56 069607 A (MITSUBISHI ELECTRIC CORP), 11.Juni 1981, * Zusammenfassung * <br> --- | 1,3,5, 10,12,14 | |
| X | GB 2 044 908 A (WOLF GMBH RICHARD) 22.Oktober 1980 | 1,3-6,15 | |
| A | <br> * Ansprüche 1,5 * <br> * Abbildungen 2,3 * <br> * Zeile 84 - Zeile 90 * <br> --- <br> -/-- | 2,11 | |

RECHERCHIERTE SACHGEBIETE (Int.Cl.6)

G02B
F21V

Der vorliegende Recherchenbericht wurde für alle Patentansprüche erstellt

| Recherchenort | Abschlußdatum der Recherche | Prüfer |
|---|---|---|
| BERLIN | 22.September 1997 | Ciarrocca, M |

Europäisches
Patentamt

**EUROPÄISCHER RECHERCHENBERICHT**

Nummer der Anmeldung

EP 97 11 1623

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE 25 35 161 A (SIEMENS AG) 24.Februar 1977<br>* Seite 1, Absatz 6 - Seite 2, Absatz 4; Abbildung 1 *<br>--- | 1,2,4-6, 10,14 | |
| X | PATENT ABSTRACTS OF JAPAN<br>vol. 006, no. 129 (P-128), 15.Juli 1982<br>& JP 57 054908 A (FUJITSU LTD), 1.April 1982,<br>* Zusammenfassung *<br>--- | 1,2,4, 10,14 | |
| X | EP 0 150 860 A (POLAROID CORP) 7.August 1985<br>* Ansprüche 2,3; Abbildung 2 *<br>--- | 1,5-7,14 | |
| X<br>A | DE 14 72 267 B (FA. CARL ZEISS) 6.Mai 1970<br><br>* Spalte 7, Zeile 20 - Zeile 34; Abbildung 5 *<br>----- | 1,5,13<br>2,8,9 | |
| | | | RECHERCHIERTE SACHGEBIETE (Int.Cl.6) |

Der vorliegende Recherchenbericht wurde für alle Patentansprüche erstellt

| Recherchenort | Abschlußdatum der Recherche | Prüfer |
|---|---|---|
| BERLIN | 22.September 1997 | Ciarrocca, M |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)